# EUROPEAN PATENT SPECIFICATION

(11) **EP 0 913 296 B1**
(45) Date of publication and mention of the grant of the patent: **16.04.2003**
(21) Application number: 98120110.6
(22) Date of filing: 23.10.1998
(51) Int. Cl.: B60R 1/06

(54) **Tilting arrangement with two rotation axes for an external rear view mirror on a vehicle**
Schwenkvorrichtung mit zwei Schwenkachsen für einen Aussenrückblickspiegel eines Kraftfahrzeuges
Dispositif pivotant à deux axes de rotation pour rétroviseur extérieur de véhicule

(30) Priority: 28.10.1997 IT TO970946
(43) Date of publication of application: 06.05.1999
(73) Proprietor: Ficomirrors Italia S.r.l. a s.u., 10078 Venaria Reale (Torino) (IT)
(72) Inventor: Lupo, Elio, 10093 Collegno (IT)
(74) Representative: Franzolin, Luigi

(56) References cited:
- DE-A- 4 108 882
- FR-A- 2 446 201
- FR-A- 2 641 242
- US-A- 4 592 529
- PATENT ABSTRACTS OF JAPAN vol. 8, no. 263 (M-342) [1700], 4 December 1984 & JP 59 137228 A (NIHON HATSUJIYOU), 7 August 1984
- PATENT ABSTRACTS OF JAPAN vol. 8, no. 244 (M-337) [1681], 9 November 1984 & JP 59 124448 A (NIHON HATSUJIYOU), 18 July 1984

## Description

The present invention relates to a tilting arrangement with two axes of rotation for an external rear view mirror on a vehicle.

Rear view mirrors on vehicles have an internal arrangement which allows it to tilt (i.e. positioning against the bodywork) in one or the other direction related to the normal operating position. The arrangement generally comprises one or several recall springs, to allow immediate return to the operating position of the mirror in the event of accidental displacement, due for instance to an impact.

The major part of the rear view mirrors today in production comprises a tilting arrangement in one axis, which allows the movement of the mirror about a single rotation axis. That arrangement, while being of relatively simple design, presents a number of disadvantages.

Above all, the need to ensure tilting in one or the other direction makes it necessary to locate the axis of rotation at a given distance from the vehicle bodywork, thereby increasing the external space requirements of the mirror itself.

In addition, rotation about a single axis does not allow complete tilting of the mirror against the bodywork, and it remains partly pushed aside in relation to the bodywork itself. Rear mirrors are also known for which the tilting is allowed by a two-axis rotation arrangement, which allows the disadvantage of the single axis arrangement as above to be overcome. In that case, the arrangement effectively has two axes of rotation, each essentially vertical and adjacent to the portion of the bodywork to which the base of the mirror is secured. The rotation about a first axis allows tilting in one direction, whereas rotation about the other axis allows rotation in the opposing direction.

Such types of arrangement, while allowing a reduction in the space requirement of the mirror and complete tilting of the mirror itself, also prove considerably more complex than the single axis arrangement, in the sense they require a considerable number of components and the use of considerably sized recall springs, with consequent problems of space needs and installation difficulties. In addition, the need to make the retracted positions stable both forwards and backwards for the body of the mirror, without the mirror itself springing automatically into the normal operating position, requires the presence of mechanisms which make the arrangement even more complex, weighty and costly and reduces its reliability. The complexity of such provisions is finally such that each of them is fully specific to a single model of rear view mirror.

FR-A-2641242 shows an arrangement in accordance with the preamble of claim 1 that, though relatively small in bulk, does not overcome completely the aforementioned drawbacks of the known arrangements.

The purpose of the present invention is to achieve an arrangement with two tilting axes for an external rear view mirror on a vehicle, which in addition to being free from the disadvantages described above, is also simple and economical in manufacture.

According to the present invention a two axes tilting arrangement for an external rear view mirror on a vehicle is provided, as recited in claim 1.

Other features and advantages of the present invention will be clarified from the description which follows of a number of non-restrictive examples of operation, with reference to the figures in the appended drawings, wherein:
- Figure 1 is a perspective view of an arrangement according to the invention, shown in the rest position corresponding with a normal operating position of the mirror;
- Figure 2 is a perspective view of the arrangement in Figure 1 in an intermediate operating position, assumed during the movement towards a first stowed position of the mirror;
- Figure 3 is a perspective view of the arrangement in Figure 1 in a further intermediate operating position, assumed during the movement towards a second stowed position of the mirror;
- Figure 4 is a plan view of the arrangement in Figure 1, in the above cited rest position;
- Figure 5 is a plan view of a possible variant of the arrangement in Figure 1;
- Figure 6 is a plan view of a second possible variant of the arrangement in Figure 1;
- Figure 7 is a plan view of a third possible variant of the arrangement in Figure 1; and
- Figure 8 illustrates in perspective exploded view, a fourth possible variant of the arrangement in Figure 1.

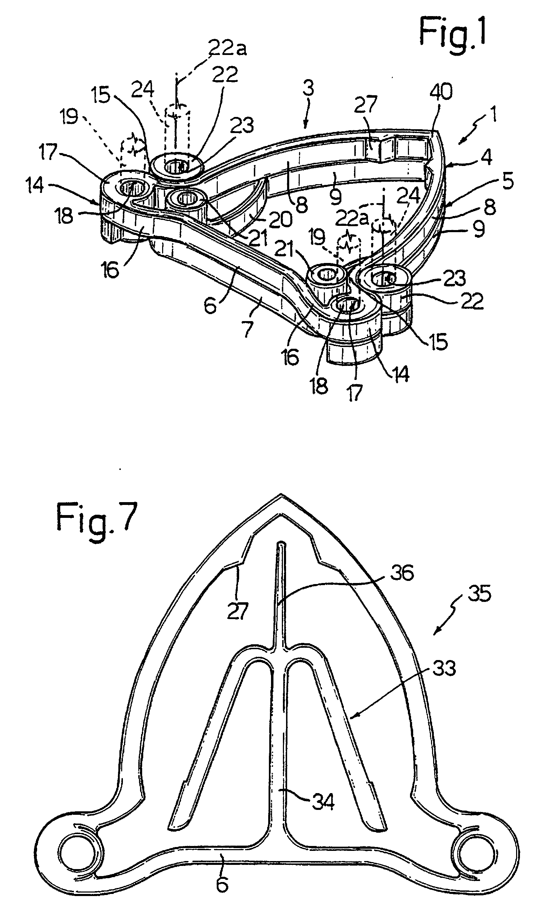

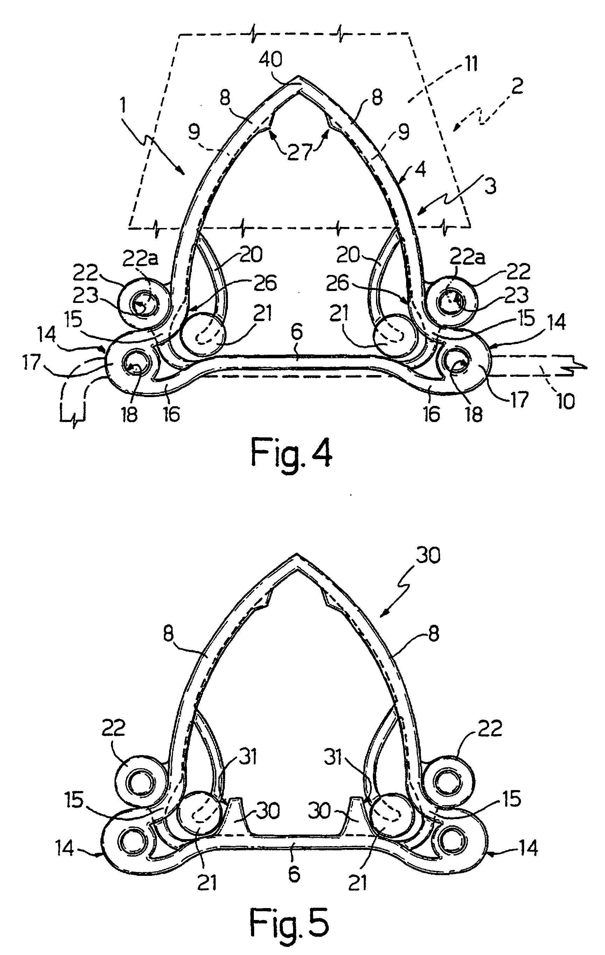

An assembly bearing reference 1 is shown with reference to Figures 1-4, featuring an arrangement with two tilting axes for a rear view mirror 2 (shown diagrammatically in the dotted lines of Figure 4) for a vehicle (not illustrated). The arrangement 1 is defined by a joint unit 3 comprising a pair of frame components 4, 5, made of thermoplastic material and each of a single piece. The frame components 4, 5 have an essentially double helical shape and are superimposed and connected together; at this point and hereinafter in the description the term double helical shape provides for an essentially isosceles triangle, with a base side essentially straight and two arcuate oblique sides, having concavities facing towards the inside of the triangle and connecting together to define a double helical. The two frame components 4, 5 have respective base sides 6, 7 and respective pairs of arcuate sides 8, 9, each of which has an essentially rectangular cross section.

A first of the two frame components, for instance, frame component 4 is integral with the fixed based of the rear view mirror 2, cited under item 10 in Figure 4, whereas the second of the two frame components in the specific case the frame component 5, is integral with the moving body of the rear view mirror 2, bearing reference 11 in Figure 4. Both frame components 4 and 5 have the double helical turned outwards from the vehicle.

In the first frame component 4, the arcuate sides 8 are connected at the base side 6 by means of respective connecting portions 14 essentially U-shaped and projecting externally from the first frame component 4 in essentially opposing directions. Each connecting portion 14 comprises in particular, a first arm 15 connected to the corresponding arcuate side 8, a second arm 16 connected to the base side 6, and a central portion 17 with an eyelet 18; the latter is designed for a lockable pin 19 (represented in dotted lines in Figure 1) to pass through it, in a known manner and not illustrated, at the base 10 of the rear view mirror 2.

In the second frame component 5, each arcuate side 9 carries integrally a first and a second engaging component 21, 22, of essentially cylindrical shape, presenting respective axes parallel to each other and orthogonal in relation to the extension plane of the second frame component 5 itself, able to cooperate in sliding mode with a corresponding arcuate side 8 of the first frame component 4. In particular, each first engaging component 21 is integrally connected with the inner wall of a respective arcuate side 9 of the second frame component 5 by means of a curved flexible arm 20; the latter is designed in one piece, and extends from an intermediate stretch of the arcuate side 9 to the summit defined by the arcuate side 9 and the base side 7, and has a concavity turned towards to the arcuate side 9 itself. The first engaging component 21 is integral with the end of the respective flexible arm 20, and is arranged, when the frame components 4 and 5 are superimposed upon each other, essentially in the same plane as the first frame component 4; in addition, this cooperates in sliding mode, under the pressure of the respective flexible arm 20, against the internal wall of the corresponding arcuate side 8 of the first frame component 4.

The second engaging component 22 has axial dimensions greater than those of the first engaging component and comprises a first axial portion secured laterally to the outer wall of the respective arcuate side 9 in close proximity of the summit defined by the arcuate side 9 itself and the base side 7, and a second axial portion located essentially in coplanar association with the first frame component 4, in such a way to cooperate in sliding mode, in opposition to the first engaging component 21, against the outer wall of the corresponding arcuate side 8 of the first frame component 4. Each second engaging component 22 also defines an eyelet 23 able to receive a respective pin 24, in a known manner and not illustrated, lockable into the body 11 of the rear view mirror.

The arcuate sides 8 of the first frame component 4 define on the basis of the aforementioned, respective arcuate trajectories for the movement of the second frame component 5. The centre of each of the said trajectories is located the axis of a respective second engaging arrangement 22. In this manner the two axes of rotation of the arrangement 1, shown under 22a in Figure 1 are defined.

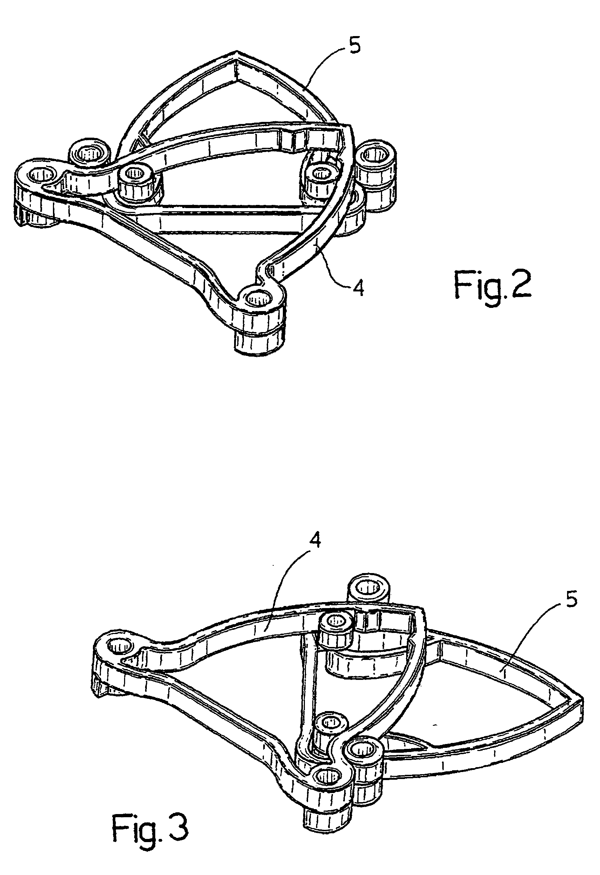

In Figures 2 and 3 two intermediate positions are shown assumed by the second frame component 5 during its movement from a rest position, shown in Figure 1, and corresponding with the normal operating position of the rear view mirror 1, into a first and respectively a second maximum rotation position (not illustrated), corresponding with the two tilting positions of the rear view mirror 1.

With reference to Figures 1 and 4, in the rest position the two frame components 4 and 5 present superimposed sides in relation to each other, whereas each first engaging component 21 is located in contact with the inner wall of the first arm 15 of the respective connecting portion 14, and the corresponding second engaging component 22 is located in contact with the outer wall of the first arm 15, thus defining an end of stroke for the second engaging component 22. The internal wall of the first arm 15 connects with the internal wall of the corresponding arcuate side 8 by means of a projection 26 (Figure 4) which, preventing the movement of the first engaging component 21, contributes towards the stabilisation of the rest position.

The first maximum rotation position (not illustrated) is reached following rotation of the second frame component 5 about one of the axes of rotation 22a and along the trajectory defined by one of the arcuate sides 8 of the first frame component 4. In Figure 2 an intermediate position of the second frame component 5 is illustrated, immediately preceding the first maximum rotation position.

In the first maximum rotation position, the pair of engaging components 21, 22 which has completed the above trajectory thus finishes in a position corresponding with the double helical of the first frame component 4, shown by reference 40. Further rotation beyond that position is prevented by the contact of the first engaging component 21 with the internal wall of the other arcuate side 8. In addition, the return of the second frame component 5 to the rest position is prevented by the presence of a projection 27 on the internal wall of the arcuate side 8, which contrasts with the movement of the first engaging component 21, making the first maximum rotation position a stable position. During the rotation of the second frame component 5 towards the first maximum rotation position, the second engaging component 22 of which the axis defines the axis of rotation, remains locked in the starting position, whereas the corresponding first engaging component 21 undergoes a slight movement to follow the rotation of the second frame component 5.

The movement from the rest position to the second maximum rotation position, through the intermediate position in Figure 3, occurs with a rotation of the second frame component 5 about the other axis of rotation 22a, in a manner symmetrical with that described above.

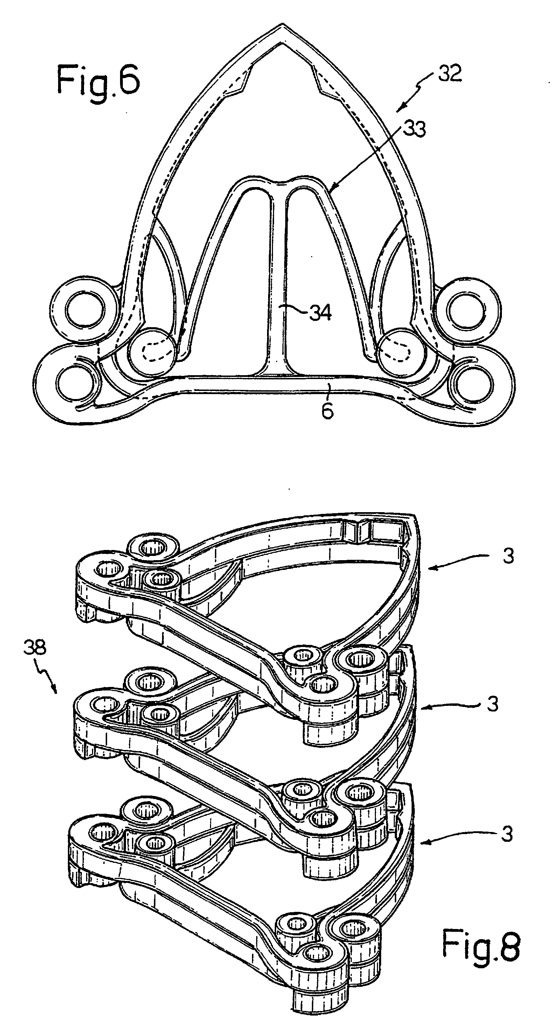

With reference of Figure 5, a tilting arrangement 29 is shown, differing from the arrangement 1 in that the first frame component 4 has a pair of extensions 30 which extend parallel to each other, from the base side 6 towards the inside of the first frame component 4. Each of the extensions 30 together with the internal wall of the first arm 15 of a corresponding connecting portion 14 forms an essentially clearance-free seat 31 for the first engaging component 21. The wear resulting from the sliding of the first sliding component 21 against the walls of the extension 31 and the first arm 15 defines an increased release load for the first engaging component 21 in starting the rotation of the second frame component 5. The shape and the disposition of the extensions 30 may obviously be varied in order to obtain a setting of the release load.

The increased release load also allows a reduction in the possibility of a relative unwanted movement of the two frame components 4, 5 in the pointing direction of the double helicals. The displacement may for instance be caused by traction exerted upon the body 11 of the mirror 2 towards the outside of the vehicle, starting from the normal operating position.

With reference to Figure 6, an arrangement is shown under 32, differing from the arrangement 1 in that the first frame component 4 comprises a flexible projection 33 in the shape of a reversed W, connected with the base side 6 by means of a straight portion 34. Each arm of the flexible projection 33 exerts a flexible action upon a respective first engaging component 21 towards the first arm 15 in order to obtain in this case also, an increase in the release load to start the rotation of the second frame component 5 from the rest position and to reduce the possibility of relative unwanted movement of the two frame components 4 and 5.

With reference to Figure 7 and as shown under reference 35 an arrangement differing from arrangement 32 is shown in that from the summit of the flexible projection 33 a straight extension 36 is extended, terminating in close proximity to the double helical 40, at a distance from the double helical 40 equal to approximately the diameter of the first engaging component 21. The free end of the extension 36 allows an interference cooperation with the first engaging component 21, when this is placed in correspondence with the double helical 40, that is to say when the second frame component 5 is in one of the two maximum rotation positions. The contact allows the release load of the second frame component 5 from the maximum rotation positions to be increased.

With reference to Figure 8, an arrangement 38 is shown (in exploded view) differing from the arrangement 1 in that it comprises several identical joint units 3 in stacked mode. All the first frame components 4 are secured to the base 10 of the mirror 2 by means of a same pair of pins (equal to the pins 19 in Figure 1), whereas the second frame components 5 are secured to the body 11 of the mirror 2 by means of a further pair of pins (equal to the pins 24 in Figure 1). The number of joint units 3 composing the arrangement 35 is established on the basis of the required loading to achieve the movement of the body 11 of the rear view mirror 2. Obviously the greater the number of joint units 3 the greater will be the necessary loading for the movement.

Stacked structures of a similar type may be obtained by superimposing joint units of the type such as in Figures 5, 6 and 7.

The arrangement in the invention offers the following advantages.

First of all there is a greater design simplicity, lesser weight, lower costs and greater reliability in relation to known arrangements.

In addition, the arrangement according to the invention does not require the presence of recall or hooking springs (in that these are intrinsically present in the structure) and is easily adaptable (with minimal or simple modifications by a variation of scale) for differing novels of rear view mirror.

Finally, being entirely made of thermoplastic material, it allows easy recycling.

Finally it is clear that the arrangement described and illustrated here will admit modifications and variations without exceeding the protective scope defined by the claims.

As an example, should the body shell of the vehicle allow sufficient space, the two frame components composing the joint unit of the arrangement (or each of the joint units, in the case of a stacked structure) may be fitted with the double helical pointing towards the inside of the vehicle, without involving any change relatively in the operation of the arrangement.

In addition, in view of the reciprocal relative movement of the two frame components according to the assumption of an integral reference to the first frame component or an assumption integral with the second frame component, it is possible to secure the first frame component (or the first frame components in the case of a stacked structure) to the body 11 of the mirror 2 and the second frame component (or the second frame components) to the base 10 of the mirror 2, without the arrangement undergoing any change in function.

In particular types of rear view mirrors, in which the body 11 of the mirror 2 is connected to the base 10 by means of two arms parallel with each other defining a space for the threading of cables or connectors, the arrangement may comprise two joint units, or two stacks of joint units, each of which is located inside a respective connecting arm.

## Claims

1. Tilting arrangement with two rotation axes for an external rear view mirror on a vehicle, the said mirror (2) comprising a base (10) fixed integral with the body shell of the vehicle and a moving body (11), able to rotate from a normal operating position towards a first stowed position and a second stowed position, opposing the first stowed position in relation to the normal operating position, the said arrangement comprising at least one joint unit (3), in turn comprising a fixed part (4) integral with the said base (10) of the mirror (2), a moving part (5) integral with the said body (11) of the mirror (2) and coupling means (21, 22) able to connect the said moving part (5) with the said fixed part (4); the said moving part (5) being able to rotate about at least first axis (22a) from a rest position, corresponding with the said normal operating position of the said body (11) towards a first and a second maximum rotation position corresponding with the said stowed positions of the said body (11), said fixed part (4) being of essentially triangular shape and presenting an arcuate side (8) defining a first trajectory for said moving part (5), a base side (6) and a further arcuate side (8); the said further arcuate side (8) defining a second trajectory for the second frame component (5) to reach the said second stowed position of the said body (11); **characterised by** the fact that both the said fixed part (4) and the said moving part (5) are defined by respective frame components (4, 5) of essentially polygonal shape, the second frame component (5) also representing an essentially triangular shape and having a respective base side (7) and a pair of respective arcuate sides (9); the said coupling means (21, 22) comprising first engaging components (21), connected with the said second frame component (5) and cooperating with the said arcuate side (8) of the said first frame component (4); the said joint unit (3) comprising in addition, flexible means (20) of support of the said engaging components (21), connecting the said first engaging components (21) with the said second frame component (5), the said first flexible support means (20) comprising a pair of flexible curved arms (20), each of which extends in overhang from the inner wall of a respective arcuate side (9) of the second frame component (5), and connects the arcuate side (9) to a respective said first engaging component (21) and exerts on the first engaging component (21) a flexible action which maintains the first bearing against the engaging component (21) in contact with a corresponding arcuate side (8) of the said first frame component (4).

2. Arrangement according to claim 1, **characterised in that** the said arcuate sides (8) have concavities turned towards the inside of the said first frame component (4).

3. Arrangement according to claim 1 or 2, **characterised in that** the said coupling means (21, 22) include second engaging means (22), which are connected to an external wall of a respective arcuate side (9) of the said second frame component (5) and are able to cooperate with the external wall of a corresponding arcuate side (8) of the said frame component (4).

4. Arrangement according to claim 3, **characterised in that** each of the said second engaging components (22) has a passing hole (23) able to receive a respective pin (24) which connects with the said body (11); each said hole (23) has an axis (22a) defining a rotation axis for the said second frame component (5).

5. Arrangement according to anyone of claims 1 to 4, **characterised in that** the said arcuate sides (8) are connected together in such a manner as to define a double helical (40) and **in that** when the said second frame component (5) is placed in one of the said maximum rotation positions, a first engaging component (21) and the corresponding second engaging component (22) are located to correspond with the said double helical (40).

6. Arrangement according to claim 5, **characterised in that** the said first frame component (4) comprises first stop means (27) located on the inner wall of its arcuate sides (8) in the proximity of the said double helical (40) and when the said frame component (5) is in one of the maximum rotation positions is able to stop the said first engaging component (21) located to correspond with the said double helical (40).

7. Arrangement according to claim 6 **characterised in that** the said first stop means (27) comprise a pair of projections (27), each of which is located on the inner wall of a respective said arcuate side (8) of the said first frame component (4).

8. Arrangement according to anyone of claims 3 to 7, **characterised in that** the said first frame component (4) has a pair of connecting portions (14), each of which connects the said base side (6) with a respective arcuate side (8), extends towards the outside of the said first frame component (4) and has a passing hole (18) able to receive a pin (19) which connects integrally with the said base (10) of the said mirror (2).

9. Arrangement according to claim 8, **characterised in that** the said connecting portions (14) define respective stroke ends for the said second engaging components (22).

10. Arrangement according to claim 9, **characterised in that** the said first frame component comprises second stop means (26), which are arranged on the inner wall of its arcuate sides (8) to correspond with the said connecting portion and are able to stop the said first engaging components (21) when the said second frame component (5) is in the rest position.

11. Arrangement according to claim 10, **characterised in that** the said stop means (26) comprise a pair of projections (26), each of which is located between a respective connecting portion (14) and a respective arcuate side (8).

12. Arrangement according to anyone of claims 1 to 11, **characterised in that** the said first frame component (4) comprises adjustment means for the release load (30; 33) integral with the said base side (6) and able to exert a contrasting force on the said first engaging components (21) when the said second frame component (5) moves from the said rest position.

13. Arrangement according to claim 12, **characterised in that** the said adjustment means for the release load (30) comprise a pair of extensions (30), extending from the said base side (6) towards the inside of the said first frame component (4); each of the said extensions (30) defining with the walls of a respective connecting portion (14) an essentially clearance-free seat (31) for a respective first engaging component (21), when the said second engaging component (5) is in the said rest position.

14. Arrangement according to claim 12, **characterised in that** the said adjustment means for the release load (33) comprise a flexible component (33) integral with the said base side (6) and present a first and a second flexible arm, both able to exert a flexible force upon the said engaging components (21) to contrast their movement.

15. Arrangement according to claim 14, **characterised in that** the said adjusting means for the release load (33) comprise an extension (36) extending between the said flexible component (33) and the said double helical (40) and when the said second frame component (5) is in one of the said maximum rotation positions is able to cooperate with the said first engaging component (21) located to correspond with the said double helical (40).

16. Arrangement according to one or other of the preceding claims, **characterised in that** it comprises several joint units arranged together in stacked mode.

## Patentansprüche

1. Schwenkvorrichtung mit zwei Schwenkachsen für einen Außenspiegel eines Fahrzeuges, wobei der Spiegel (2) eine Basis (10) aufweist, die integriert an der Außenkarosserie des Fahrzeugs befestigt ist, und einen sich bewegenden Körper (11), der in der Lage ist, aus einer normalen Betriebsstellung in eine erste eingezogene Stellung zu schwenken und in eine zweite eingezogene Stellung, die der ersten eingezogenen Stellung im Verhältnis zur normalen Betriebestellung gegenüberliegt, wobei die Vorrichtung mindestens eine Gelenkeinheit (3) aufweist, die wiederum ein fixiertes Teil (4) integriert mit der Basis (10) des Spiegels (2) aufweist, ein sich bewegendes Teil (5), das mit dem Körper (11) des Spiegels (2) einstückig ist und eine Kopplungsvorrichtung (21, 22), die in der Lage ist, das sich bewegende Teil (5) mit dem fixierten Teil (4) zu verbinden; wobei das sich bewegende Teil (5) in der Lage ist, um mindestens eine erste Achse (22a) aus einer Ruhestellung zu schwenken, die der normalen Betriebsstellung des Körpers (11) entspricht, zu einer ersten und einer zweiten maximalen Schwenkposition, die den eingezogenen Positionen des Körpers (11) entspricht, wobei das fixierte Teil (4) im wesentlichen dreieckig ist und eine gekrümmte Seite (8) darstellt, die eine erste Trajektorie für das sich bewegende Teil (5) definiert, eine Basisseite (6) und eine weitere gekrümmte Seite (8) ; wobei die weitere gekrümmte Seite (8) eine zweite Trajektorie für die zweite Rahmenkomponente (5) definiert, um die zweite eingezogene Stellung des körpers (11) zu erreichen, **gekennzeichnet durch** die Tatsache, daß sowohl das fixierte Teil (4) als auch das sich bewegende Teil (5) **durch** die jeweiligen Rahmenkomponenten (4, 5) mit einer im wesentlichen polygonalen Gestalt definiert werden, wobei die zweite Rahmenkomponente (5) auch eine im wesentlichen dreieckige Gestalt besitzt und eine jeweilige Basisseite (7) und ein Paar jeweiliger gekrümmter Seiten (9) hat; wobei die Kopplungsvorrichtung (21, 22) erste Eingriffskomponenten (21) aufweist, die mit der zweiten Rahmenkomponente (5) verbunden sind und mit der gekrümmten Seite (8) der ersten Rahmenkomponente (4) zusammenwirkt; wobei die Gelenkeinheit (3) zusätzlich eine flexible Vorrichtung (20) zur Abstützung der Eingriffskomponenten (21) aufweist, die die ersten Eingriffskomponenten (21) mit der zweiten Rahmenkomponente (5) verbindet, wobei die erste flexible Abatützvorrichtung (20) ein Paar flexibler gekrümmter Arme (20) aufweist, von denen sich jeder in einen Überhang von der Innenwand einer jeweiligen gekrümmten Seite (9) der zweiten Rahmenkomponente (5) aus erstreckt und die gekrümmte Seite (9) mit einer jeweiligen ersten Eingriffskomponente (21) verbindet und eine flexible Wirkung auf die erste Eingriffskomponente (21) ausübt, die das erste Lager in Kontakt mit einer entsprechenden gekrümmten Seite (8) der ersten Rahmenkomponente (4) gegen die Eingriffskomponente (21) hält.

2. Vorrichtung gemäß Anspruch 1, **dadurch gekennzeichnet, daß** die gekrümmten Seiten (8) Konkavitäten besitzt, die zur Innenseite der ersten Rahmenkomponente (4) gedreht sind.

3. Vorrichtung gemäß Anspruch 1 oder 2, **dadurch gekennzeichnet, daß** die Kopplungsvorrichtungen (21, 22) zweite Eingriffsvorrichtungen (22) enthalten, die mit einer äußeren Wand einer jeweiligen gekrümmten Seite (9) der zweiten Rahmenkomponente (5) verbunden sind und in der Lage sind, mit der äußeren Wand einer entsprechenden gekrümmten Seite (8) der Rahmenkomponente (4) zusammenzuwirken.

4. Vorrichtung gemäß Anspruch 3, **dadurch gekennzeichnet, daß** die zweiten Eingriffskomponenten (22) ein Durchgangsloch (23) besitzen, das in der Lage ist, einen jeweiligen Zapfen (24) aufzunehmen, der mit dem Körper (11) verbunden ist, wobei jedes Loch (23) eine Achse (22a) besitzt, die eine Drehachse für die zweite Rahmenkomponente (5) definiert.

5. Vorrichtung gemäß einem der Ansprüche 1 bis 4, **dadurch gekennzeichnet, daß** die gekrümmten Seiten (8) in einer solchen Art und Weise miteinander verbunden sind, daß sie eine Doppelspirallinie (40) definieren und daß dann, wenn die zweite Rahmenkomponente (5) in einer der maximalen Schwenkstellungen angeordnet ist, eine erste Eingriffskomponente (21) und die entsprechende zweite Eingriffskomponente (22) so angeordnet sind, daß sie der Doppelspirallinie (40) entsprechen.

6. Vorrichtung gemäß Anspruch 5, **dadurch gekennzeichnet, daß** .die erste Rahmenkomponente (4) eine erste Stoppvorrichtung (27) aufweist, die auf der inneren Wand ihrer gekrümmten Seiten (8) in der Nähe der doppelten Spirallinie (40) angeordnet ist, und dann, wenn sich die Rahmenkomponente (5) in einer der maximalen Schwenkpositionen befindet, in der Lage ist, die erste Eingriffskomponente (21), die so angeordnet ist, daß sie der doppelten Spirallinie (40) entspricht, zu stoppen.

7. Vorrichtung gemäß Anspruch 6, **dadurch gekennzeichnet, daß** die erste Stoppvorrichtung (27) ein Paar Vorsprünge (27) aufweist, von denen jeder auf der inneren Wand einer jeweiligen gekrümmten Seite (8) der ersten Rahmenkomponente (4) angeordnet ist.

8. Vorrichtung gemäß einem der Ansprüche 3 bis 7, **dadurch gekennzeichnet, daß** die erste Rahmenkomponente (4) ein Paar Verbindungsabechnitte (14) besitzt, von denen jeder die Basisseite (6) mit einer jeweils gekrümmten Seite (8) verbindet, sich nach außerhalb der ersten Rahmenkomponente (4) erstreckt und ein Durchgangsloch (18) besitzt, das in der Lage ist, einen Zapfen (19) aufzunehmen, der für eine einstückige Verbindung mit der Basis (10) des Spiels (2) sorgt.

9. Vorrichtung gemäß Anspruch 8, **dadurch gekennzeichnet, daß** die Verbindungsabschnitte (14) jeweilige Arbeitstaktenden für die zweiten Eingriffskomponenten (22) bilden.

10. Vorrichtung gemäß Anspruch 9, **dadurch gekennzeichnet, daß** die erste Rahmenkomponente zweite Stoppvorrichtungen (26) aufweisen, die auf der inneren Wand ihrer gekrümmten Seiten (8) angeordnet sind, um dem Verbindungsabschnitt zu entsprechen und in der Lage zu sein, die ersten Eingriffskomponenten (21) zu stoppen, wenn sich die zweite Rahmenkomponente (5) in der Ruhestellung befindet.

11. Vorrichtung gemäß Anspruch 10, **dadurch gekennzeichnet, daß** die Stoppvorrichtung (26) ein Paar Vorsprünge (26) aufweist, von denen jeder zwischen einem jeweiligen Verbindungsabschnitt (14) und einer jeweiligen gekrümmten Linie (8) angeordnet ist.

12. Vorrichtung gemäß einem der Ansprüche 1 bis 11, **dadurch gekennzeichnet, daß** die erste Rahmenkomponente (4) eine Einatellvorrichtung für die Freigabelast (30; 33) aufweist, integriert mit der Basisseite (6), und in der Lage, eine Gegenkraft auf die ersten Eingriffskomponenten (21) auszuüben, wenn sich die zweite Rahmenkomponente (5) aus der ersten Ruhestellung bewegt.

13. Vorrichtung gemäß Anspruch 12, **dadurch gekennzeichnet, daß** die Einstellvorrichtung für die Freigabelast (30) ein Paar Verlängerungen (30) aufweist, die sich von der Basisseite (6) zur Innenseite der ersten Rahmenkomponente (4) erstrecken; wobei jede der Verlängerungen (30) mit den Wänden eines jeweiligen Verbindungsabschnitts (14) einen im wesentlichen spielfreien Sitz (31) für eine jeweilige erste Eingriffskomponente (21) definiert, wenn sich die zweite Eingriffskomponente (5) in der Ruhestellung befindet.

14. Vorrichtung gemäß Anepruch 12, **dadurch gekennzeichnet, daß** die Einstellvorrichtung für die Freigabelast (33) eine flexible Komponente (33) aufweist, integriert mit der Basisseite (6), und einen ersten und einen zweiten flexiblen Arm darstellt, die beide in der Lage sind, eine flexible Kraft auf die Eingriffskomponenten (21) auszuüben, um deren Bewegung entgegenzuwirken.

15. Vorrichtung gemäß Anspruch 14, **dadurch gekennzeichnet, daß** die Einstellvorrichtung für die Freigabelast (33) eine Verlängerung (36) aufweist, die sich zwischen der flexiblen Komponente (33) und der doppelten Schraubenlinie (40) erstreckt, und die dann, wenn sich die zweite Rahmenkomponente (5) in einer der maximalen Schwenkpositionen befindet, in der Lage ist, mit der ersten Eingriffskomponente (21) zusammenzuwirken, die so angeordnet ist, daß sie der doppelten Schraubenlinie (40) entspricht.

16. Vorrichtung gemäß dem einen oder anderen der vorhergehenden Ansprüche, **dadurch gekennzeichnet, daß** sie mehrere Gelenkeinheiten aufweist, die in einem gestapelten Modus zusammen angeordnet sind.

## Revendications

1. Dispositif de pivotement avec deux axes de rotation pour un rétroviseur extérieur sur un véhicule, ledit rétroviseur (2) comprenant une base (10) fixée incorporée à la caisse de carrosserie du véhicule et un corps mobile (11), capable de tourner d'une position normale de fonctionnement vers une première position de rangement et une deuxième position de rangement, opposée à la première position de rangement par rapport à la position normale de fonctionnement, ledit dispositif comprenant au moins un groupe charnière (3), comprenant à son tour une partie fixe (4) incorporée à ladite base (10) du rétroviseur (2), une partie mobile (5) incorporée au dit corps (11) du rétroviseur (2) et des moyens de couplage (21, 22) capables de relier ladite partie mobile (5) à ladite partie fixe (4) ; ladite partie mobile (5) étant capable de pivoter sur au moins un premier axe (22a) à partir d'une position de repos, correspondant à ladite position normale de fonctionnement dudit corps (11) vers une première et une deuxième position de rotation maximum correspondant aux dites positions de rangement dudit corps (11), ladite partie fixe (4) étant d'une forme sensiblement triangulaire et présentant un côté courbe (8) définissant une première trajectoire pour ladite partie mobile (5), un côté de base (6) et un autre côté courbe (8) ; ledit autre côté courbe (8) définissant une deuxième trajectoire pour le deuxième composant d'armature (5) pour atteindre ladite deuxième position de rangement dudit corps (11) ; **caractérisé par le fait que** ladite partie fixe (4) ainsi que ladite partie mobile (5) sont définies par des composants d'armature respectifs (4, 5) de forme sensiblement polygonale, le deuxième composant d'armature (5) présentant aussi une forme sensiblement triangulaire et ayant un côté de base respectif (7) et une paire de côtés courbes respectifs (9) ; lesdits moyens de couplage (21, 22) comprenant des premiers composants d'enclenchement (21), reliés au dit deuxième composant d'armature (5) et coopérant avec ledit côté courbe (8) dudit premier composant d'armature (4) ; ledit groupe charnière (3) comprenant en outre des moyens flexibles (20) de support desdits composants d'enclenchement (21), reliant les dits premiers composants d'enclenchement (21) au dit deuxième composant d'armature (5), ledit premier moyen de support flexible (20) comprenant une paire de bras courbés flexibles (20), dont chacun se prolonge en porte-à-faux à partir de la paroi intérieure d'un côté courbe respectif (9) du deuxième composant d'armature (5), et relie le côté courbe (9) à un dit premier composant d'enclenchement respectif (21) et exerce sur le premier composant d'enclenchement (21) une action flexible qui maintient le premier en appui contre le composant d'enclenchement (21) en contact avec un côté courbe correspondant (8) dudit premier composant d'armature (4).

2. Dispositif selon la revendication 1, **caractérisé en ce que** lesdits côtés courbes (8) ont des concavités tournées vers l'intérieur dudit premier composant d'armature (4).

3. Dispositif selon la revendication 1 ou 2, **caractérisé en ce que** lesdits moyens de couplage (21, 22) incluent des deuxièmes moyens d'enclenchement (22), qui sont reliés à une paroi externe d'un côté courbe respectif (9) dudit deuxième composant d'armature (5) et sont capables de coopérer avec la paroi externe d'un côté courbe correspondant (8) dudit composant d'armature (4).

4. Dispositif selon la revendication 3, **caractérisé en ce que** chacun des dits deuxièmes composants d'enclenchement (22) a un trou de passage (23) capable de recevoir une broche respective (24) qui est reliée au dit corps (11) ; chaque dit trou (23) a un axe (22a) définissant un axe de rotation pour ledit deuxième composant d'armature (5).

5. Dispositif selon l'une quelconque des revendications 1 à 4, **caractérisé en ce que** lesdits côtés courbes (8) sont reliés ensemble de manière à définir une double hélice (40) et **en ce que**, lorsque ledit deuxième composant d'armature (5) est placé dans une desdites positions de rotation maximum, un premier composant d'enclenchement (21) et le deuxième composant d'enclenchement correspondant (22) se placent pour correspondre à ladite double hélice (40).

6. Dispositif selon la revendication 5, **caractérisé en ce que** ledit premier composant d'armature (4) comprend des premiers moyens d'arrêt (27) situés sur la paroi intérieure de ses côtés courbes (8) à proximité de ladite double hélice (40) et lorsque ledit composant d'armature (5) est dans une des positions de rotation maximum, est capable de stopper ledit premier composant d'enclenchement (21) placé pour correspondre à ladite double hélice (40).

7. Dispositif selon la revendication 6, **caractérisé en ce que** lesdits premiers moyens d'arrêt (27) comprennent une paire de projections (27), dont chacune est située sur la paroi intérieure d'un dit côté courbe respectif (8) dudit premier composant d'armature (4).

8. Dispositif selon l'une quelconque des revendications 3 à 7, **caractérisé en ce que** ledit premier composant d'armature (4) a une paire de parties de raccord (14), dont chacune relie ledit côté de base (6) à un côté courbe respectif (8), se prolonge vers l'extérieur dudit premier composant d'armature (4) et a un trou de passage (18) capable de recevoir une broche (19) qui est reliée intégralement à ladite base (10) dudit rétroviseur (2).

9. Dispositif selon la revendication 8, **caractérisé en ce que** lesdites parties de raccord (14) définissent des fins de course respectives pour lesdits deuxièmes composants d'enclenchement (22).

10. Dispositif selon la revendication 9, **caractérisé en ce que** ledit premier composant d'armature comprend des deuxièmes composants d'arrêt (26), qui sont agencés sur la paroi intérieure de ses côtés courbes (8) pour correspondre à ladite partie de raccord et sont capables de stopper lesdits premiers composants d'enclenchement (21) lorsque ledit deuxième composant d'armature (5) est dans la position de repos.

11. Dispositif selon la revendication 10, **caractérisé en ce que** lesdits moyens d'arrêt (26) comprennent une paire de projections (26), dont chacune est située entre une partie de raccord respective (14) et un côté courbe respectif (8).

12. Dispositif selon l'une quelconque des revendications 1 à 11, **caractérisé en ce que** ledit premier composant d'armature (4) comprend des moyens d'ajustement de la charge de déclenchement (30 ; 33) incorporés au dit côté de base (6) et capables d'exercer une force antagoniste sur lesdits premiers composants d'enclenchement (21) lorsque ledit deuxième composant d'armature (5) quitte ladite position de repos.

13. Dispositif selon la revendication 12, **caractérisé en ce que** lesdits moyens d'ajustement de la charge de déclenchement (30) comprennent une paire de prolongements (30), s'étendant à partir dudit côté de base (6) vers l'intérieur dudit premier composant d'armature (4) ; chacun desdits prolongements (30) définissant avec les parois d'une partie de raccord respective (14) un siège sensiblement sans jeu (31) pour un premier composant d'enclenchement respectif (21), lorsque ledit deuxième composant d'enclenchement (5) est dans ladite position de repos.

14. Dispositif selon la revendication 12, **caractérisé en ce que** lesdits moyens d'ajustement de la charge de déclenchement (33) comprennent un composant flexible (33) incorporé au dit côté de base (6) et présentent un premier et un deuxième bras flexible, tous deux capables d'exercer une force élastique sur lesdits composants d'enclenchement (21) pour s'opposer à leur mouvement.

15. Dispositif selon la revendication 14, **caractérisé en ce que** lesdits moyens d'ajustement de la charge de déclenchement (33) comprennent un prolongement (36) s'étendant entre ledit composant flexible (33) et ladite double hélice (40) et lorsque ledit deuxième composant d'armature (5) est dans une desdites positions de rotation maximum est capable de coopérer avec ledit premier composant d'enclenchement (21) placé pour correspondre à ladite double hélice (40).

16. Dispositif selon l'une quelconque des revendications précédentes, **caractérisé en ce qu'**il comprend plusieurs groupes charnières agencés ensemble en mode empilé.
